# EUROPÄISCHE PATENTSCHRIFT

(11) **EP 2 561 977 B1**
(45) Veröffentlichungstag und Bekanntmachung des Hinweises auf die Patenterteilung: **07.05.2014**
(21) Anmeldenummer: 11006906.9
(22) Anmeldetag: 24.08.2011
(51) Int. Cl.: B29C 70/44, B29C 70/54

(54) **Verfahren zur Herstellung eines Windenergieanlagenrotorblattteils mit einem kohlenstofffaserverstärkten Hauptgurt**
Method of manufacturing a wind energy facility rotor blade section with a carbon fibre reinforced main belt
Procédé de fabrication d'un élément d'âme de rotor d'éolienne doté d'une structure principale renforcée de fibres de carbone

(43) Veröffentlichungstag der Anmeldung: 27.02.2013
(73) Patentinhaber: Nordex Energy GmbH, 22419 Hamburg (DE)
(72) Erfinder: Frankowski. Marco, 18347 Ostseebad Wustrom (DE); Austinat, Dirk, 17126 Jarmen (DE)
(74) Vertreter: Hauck Patent- und Rechtsanwälte

(56) Entgegenhaltungen:
- EP-A1- 1 990 178
- EP-A1- 2 153 964
- WO-A1-2010/015783
- US-A- 5 403 537

## Beschreibung

Die Erfindung betrifft ein Verfahren zur Herstellung eines Windenergieanlagerotorblattteils mit einem kohlenstofffaserverstärkten Hauptgurt. Windenergieanlagenrotorblätter oder Teile davon, beispielsweise Halbschalen, werden üblicherweise aus faserverstärkten Kunststoffmaterialien hergestellt. Häufig wird eine Kombination aus Glasfasern mit Polyester- oder Epoxidharzen eingesetzt.

Aus der Druckschrift EP 0 525 263 A1 ist ein Vakuuminfusionsverfahren zur Herstellung von faserverstärkten Kunststoffteilen bekannt geworden. Bei dem bekannten Verfahren werden mehrere Lagen eines Fasermaterials in eine Form eingelegt. Unterhalb und oberhalb der Lagen des Fasermaterials befinden sich jeweils Verteilermedien, die durch weitere Lagen aus sogenannten Abreißgeweben von den Lagen des Fasermaterials getrennt sind. An der Unterseite der Form, unterhalb des unteren Verteilermediums, befindet sich ein Angusskanal, und oberhalb des oberen Verteilermediums befindet sich ein Absaugkanal. Über den Absaugkanal wird die luftdicht verschlossene Form evakuiert, wobei ein flüssiges Kunststoffmaterial durch den Angusskanal angesaugt wird. Dieses verteilt sich durch das untere Verteilermedium über die gesamte Fläche der Form und durchdringt die Lagen des Fasermaterials vollständig. Nach dem Aushärten des Kunststoffmaterials werden die Verteilermedien und die Abreißgewebe von dem faserverstärkten Kunststoff entfernt.

Aus der Druckschrift WO 2007/038930 A1 ist ein anderes Verfahren zur Herstellung faserverstärkter Kunststoffteile bekannt geworden. Bei diesem bekannten Verfahren wird als Verteilermedium ein poröses Material verwendet, das eine Verbindung mit dem infundierten Kunststoffmaterial eingehen kann. Nach dem Aushärten des Kunststoffs verbleibt das Verteilermedium in dem fertigen Bauteil. Es kann insbesondere eine Oberfläche des Bauteils bilden.

Aus der Druckschrift EP 2 153 964 A1 ist ein Verfahren zur Herstellung einer Halbschale eines Windenergieanlagenrotorblatts bekannt geworden. Es handelt sich ebenfalls um ein Vakuuminfusionsverfahren. Eine Besonderheit besteht darin, dass das verwendete Fasermaterial einen Volumenanteil von mindestens 20% von Metalldrähten enthält. Die Metalldrähte weisen einen größeren Durchmesser als die zusätzlich verwendeten Glas- oder Kohlenstofffasern auf, wodurch sich die Durchtränkung des Fasermaterials mit dem flüssigen Kunststoffmaterial beschleunigen soll.

Bei allen genannten Verfahren ist es für eine optimale Festigkeit des faserverstärkten Bauteils wichtig, dass das Fasermaterial vollständig von dem flüssigen Kunststoffmaterial durchtränkt wird und dass sich keine Lufteinschlüsse ausbilden. Insbesondere bei Verwendung von Kohlenstofffasern, die häufig wesentlich geringere Durchmesser als beispielsweise Glasfasern aufweisen, bereitet dies in der Praxis erhebliche Schwierigkeiten und erfordert häufig die Verwendung von niedrigviskosen Kunststoffmaterialien als Matrixmaterial. Dies gilt insbesondere, wenn unterschiedliche Fasermaterialien in einem einzigen Bauteil kombiniert sind, wie z.B. bei Windenergieanlagenrotorblattteilen mit einem kohlenstofffaserverstärkten Hauptgurt, wobei diese zudem sehr große Abmessungen aufweisen.

Es ist daher bekannt geworden, kohlenstofffaserverstärkte Hauptgurte für solche Windenergieanlagenrotorblätter in einem ersten Vakuum-Infusionsverfahren fertigzustellen und anschließend mit den zugehörigen Rotorblatthalbschalen, bestehend beispielsweise aus glasfaserverstärkten Kunststoffmaterialien, zu verbinden. Dadurch kann die vollständige Durchtränkung des Kohlenstofffasermaterials besser kontrolliert werden. Das Verfahren ist jedoch aufwendig und bei der Verbindung des Kohlenstoffgurts mit den Halbschalen können weitere Schwierigkeiten auftreten.

Davon ausgehend ist es die Aufgabe der Erfindung, ein Verfahren zur Herstellung eines Windenergieanlagenrotorblattteils mit einem kohlenstofffaserverstärkten Hauptgurt zur Verfügung zu stellen, das einfacher auszuführen ist und eine vollständige Durchtränkung des Kohlenstofffasermaterials und eine einwandfreie Verbindung mit den weiteren Bestandteilen des Windenergieanlagenrotorblattteils zuverlässig ermöglicht.

US-Patent Nr. 5,403,537 beschreibt die Herstellung eines Faserverbundbauteils in einem Vakuuminfusionsverfahren. Das hergestellte Bauteil weist einen einzigen Fasertyp auf. Das Durchtränken mit dem flüssigen Kunststoffmaterial erfolgt über Angusskanäle. Unterhalb des aus dem Fasermaterial aufgebauten Laminats befindet sich ein Verteilermedium.

Die Druckschrift EP 1 990 178 A1 beschreibt ein Verfahren zur Herstellung einer Struktur aus einem Faserverbundmaterial. Bei dem bekannten Verfahren werden mehrere Lagen desselben Verstärkungsfasermaterials in einem Vakuuminfusionsverfahren mit einem flüssigen Kunststoffmaterial durchtränkt. Ein Verteilermedium wird zwischen den Lagen des Verstärkungsfasermaterials angeordnet.

Diese Aufgabe wird gelöst durch das Verfahren mit den Merkmalen des Anspruchs 1. Vorteilhafte Ausgestaltungen sind in den sich anschließenden Unteransprüchen angegeben.

Das Verfahren dient zur Herstellung eines Windenergieanlagenrotorblattteils mit einem kohlenstofffaserverstärkten Hauptgurt und weist die folgenden Schritte auf, die in ihrer Reihenfolge zumindest teilweise variiert werden können:
- Bereitstellen einer Form,
- Einlegen mindestens einer Lage eines ersten Fasermaterials in die Form, wobei sich das erste Fasermaterial über eine erste Breite erstreckt,
- Einlegen eines ersten Verteilermediums in die Form,
- Einlegen einer Vielzahl von Lagen eines Kohlenstofffasermaterials oberhalb des ersten Verteilermediums in die Form, wobei sich die Lagen des Kohlenstofffasermaterials über eine zweite Breite erstrecken, die kleiner ist als die erste Breite, so dass auf beiden Seiten des Kohlenstofffasermaterials Anschlussabschnitte des ersten Fasermaterials über das Kohlenstofffasermaterial überstehen,
- Einlegen eines zweiten Verteilermediums und Anordnen mindestens eines Absaugkanals oberhalb des Kohlenstofffasermaterials,
- Anordnen von Angusskanälen im Bereich der Anschlussabschnitte,
- Schließen der Form,
- Absaugen der Luft aus der Form durch den mindestens einen Absaugkanal und
- Angießen eines flüssigen, aushärtenden Kunststoffmaterials durch die Angusskanäle.

Die bereitgestellte Form kann eine innere Fläche aufweisen, die eine äußere Fläche des Windenergieanlagenrotorblattteils definiert. Die Form weist eine Länge und eine Breite auf, die im Wesentlichen der Länge bzw. der Breite des Windenergieanlagenrotorblattteils entsprechen bzw. geringfügig größer sind. Die Länge der Form kann beispielsweise 20 m und die Breite kann beispielsweise 50 cm oder mehr betragen.

Das in die Form eingelegte erste Fasermaterial kann beispielsweise ein Glasfasermaterial sein. Das erste Fasermaterial unterscheidet sich von dem Kohlenstofffasermaterial, und zwar hinsichtlich des Materials, aus dem die Fasern bestehen, und/oder hinsichtlich der Durchmesser und/oder der Längen der Fasern und/oder hinsichtlich der Orientierung der Fasern. Es erstreckt sich über eine erste Breite, die im Wesentlichen der Breite der Form entsprechen kann. Die mindestens eine Lage des ersten Fasermaterials kann eine äußere Fläche des Windenergieanlagenrotorblattteils bilden, insbesondere einen Teil einer Außenschale des Windenergieanlagenrotorblatts. Zwischen dem ersten Fasermaterial und der Form können weitere Materialien angeordnet sein, insbesondere kann die Form gewachst sein oder ein sonstiges Trennmittel aufweisen, das ein Entnehmen des Windenergieanlagenrotorblattteils nach dem Aushärten des Kunststoffmaterials ermöglicht. Es kann auch ein

Gelcoat oder ein sonstiges Material, das eine Beschichtung des ersten Fasermaterials bildet und/oder die Oberflächeneigenschaften des Windenergieanlagenrotorblattteils in einer gewünschten Weise beeinflusst, verwendet werden.

Zusätzlich zu der mindestens einen Lage des ersten Fasermaterials wird ein erstes Verteilermedium in die Form eingelegt. Das Verteilermedium kann eine poröse und/oder offenporige und/oder Freiräume oder Kanäle ausbildende, insbesondere ein- oder mehraxiale Struktur aufweisen, die eine schnelle und gleichmäßige Verteilung des flüssigen Kunststoffmaterials in der von dem Verteilermedium gebildeten Lage begünstigt. Das erste Verteilermedium kann nach dem Aushärten des Kunststoffmaterials in dem Windenergieanlagenrotorblattteil verbleiben. Es kann von dem flüssigen Kunststoffmaterial durchdrungen und benetzt werden und eine Verbindung mit diesem eingehen, so dass die an das Verteilermedium angrenzenden Materiallagen nach dem Aushärten des Kunststoffmaterials fest miteinander verbunden sind.

Oberhalb des ersten Verteilermediums wird eine Vielzahl von Lagen eines Kohlenstofffasermaterials in die Form eingelegt. Diese können unmittelbar oberhalb des ersten Verteilermediums eingelegt werden. Es können auch weitere Materiallagen, insbesondere die mindestens eine Lage des ersten Fasermaterials, unmittelbar unterhalb der Lagen des Kohlenstofffasermaterials und somit zwischen dem ersten Verteilermedium und der Vielzahl von Lagen des Kohlenstofffasermaterials angeordnet werden. Die Gesamtheit der Lagen des Kohlenstofffasermaterials kann nach dem Aushärten des Kunststoffmaterials einen kohlenstofffaserverstärkten Hauptgurt des Windenergieanlagenrotorblattteils bilden. Die Lagen des Kohlenstofffasermaterials erstrecken sich über eine zweite Breite, die kleiner ist als die erste Breite. Mit anderen Worten weist der von dem Kohlenstofffasermaterial gebildete Hauptgurt eine geringere Breite auf, als die darunter angeordneten Lagen des ersten Fasermaterials. Die Anordnung der genannten Materialien erfolgt dabei so, dass auf beiden Seiten des Kohlenstofffasermaterials bzw. des daraus gebildeten Hauptgurts Anschlussabschnitte des ersten Fasermaterials überstehen. Diese Anschlussabschnitte dienen einer Verbindung des Windenergieanlagenrotorblattteils mit weiteren Bestandteilen eines Rotorblatts, insbesondere mit weiteren Abschnitten einer Außenschale, die seitlich des Hauptgurts angeordnet sind.

Oberhalb des Kohlenstofffasermaterials wird ein zweites Verteilermedium eingelegt und mindestens ein Absaugkanal angeordnet. Im Gegensatz zu dem ersten Verteilermedium kann dieses Verteilermedium wahlweise nach dem Aushärten des Kunststoffmaterials von dem Windenergieanlagenrotorblattteil entfernt werden. Hierzu kann zwischen dem Kohlenstofffasermaterial und dem zweiten Verteilermedium beispielsweise ein Abreißgewebe angeordnet werden. Alternativ kann das zweite Verteilermedium in eine semipermeable Membran (VAP-Folie) eingeschlagen werden. Die semipermeable Membran ist selbstabtrennend, so dass das zweite Verteilermedium nach dem Aushärten zusammen mit der Folie entfernt werden kann.

Im Bereich der Anschlussabschnitte werden Angusskanäle angeordnet, insbesondere parallel zu einer Längsachse der Form. Durch diese wird das flüssige Kunststoffmaterial im Bereich der Anschlussabschnitte infundiert, insbesondere auf beiden Seiten des Kohlenstofffasermaterials.

Die Form wird luftdicht geschlossen, zum Beispiel mit einer Vakuumfolie. Hierzu kann die gesamte Anordnung mit der Folie abgedeckt und Ränder der Form können luftdicht mit der Vakuumfolie verbunden werden. Anschließend wird die Luft aus der Form durch den mindestens einen Absaugkanal abgesaugt, so dass innerhalb der Form ein Vakuum bzw. ein starker Unterdruck erzeugt wird. Gleichzeitig oder anschließend wird ein flüssiges, aushärtendes Kunststoffmaterial durch die Angusskanäle angegossen, so dass es im Bereich der Anschlussabschnitte in die evakuierte Form infundiert wird. Das flüssige Kunststoffmaterial kann beispielsweise ein Polyesterharz und/oder ein Epoxidharz aufweisen. Das Angießen kann beispielsweise durch Verbinden der Angusskanäle mit einem das flüssige Kunststoffmaterial enthaltenden Behälter erfolgen, beispielsweise über einen Schlauch. Durch die Verbindung und den innerhalb der Form bestehenden Unterdruck wird das Kunststoffmaterial dann durch die Angusskanäle angesaugt und gelangt in das Innere der Form.

Bei der erfindungsgemäßen Anordnung der einzelnen Materiallagen, insbesondere des ersten Verteilermediums, das unterhalb der Lagen des Kohlenstofffasermaterials angeordnet ist, verteilt sich das flüssige Kunststoffmaterial relativ schnell unterhalb des Kohlenstofffasermaterials. Von dort aus durchtränkt es das Kohlenstofffasermaterial mit einer Fließrichtung von unten nach oben bis zum zweiten Verteilermedium hin. Dies begünstigt eine vollständige Durchtränkung des Kohlenstofffasermaterials und ein Verdrängen sämtlicher, unter Umständen in dem Kohlenstofffasermaterial gefangener Lufteinschlüsse. Es wird die Ausbildung einer großflächigen Fließfront innerhalb des Kohlenstofffasermaterials erreicht und der innerhalb des Kohlenstofffasermaterials zu durchlaufende Strömungsweg erfolgt in Richtung der Höhe des Kohlenstofffasermaterials, entsprechend der Dicke des kohlenstofffaserverstärkten Hauptgurts. Diese Dicke ist bei derartigen Hauptgurten in der Regel wesentlich geringer als die Breite des Hauptgurts, die beispielsweise 40 cm oder mehr betragen kann. Die für eine vollständige Durchtränkung des Kohlenstofffasermaterials benötigte Zeit wird durch diese Strömungsrichtung so kurz wie möglich. Aufgrund der kurzen Fließwege und dem entsprechend induzierten geringeren Fließwiderstand werden Einschlüsse effektiv beseitigt.

Gleichzeitig kommt es bei dem erfindungsgemäßen Verfahren zwangsläufig zu einer optimalen Verbindung zwischen dem Hauptgurt und den darunter befindlichen Lagen des ersten Fasermaterials, weil beide in einem einzigen Verfahrensschritt mit dem Kunststoffmaterial durchtränkt werden. Dadurch, dass auf diese Weise die von den Lagen des ersten Fasermaterials gebildeten Teile der Außenschale des Rotorblatts und der Hauptgurt in einem einzigen Infusionsverfahren hergestellt werden können, reduziert sich zudem die Herstellungszeit.

Es versteht sich, dass die Reihenfolge der angegebenen Verfahrensschritte zumindest teilweise variiert werden kann und dass zwischen den einzelnen Schritten weitere Verfahrensschritte ausgeführt werden können. Beispielsweise können weitere Materiallagen in die Form eingelegt werden. Dass die Vielzahl von Lagen des Kohlenstofffasermaterials oberhalb des ersten Verteilermediums in die Form eingelegt wird, bedeutet nicht notwendigerweise, dass das Kohlenstofffasermaterial unmittelbar auf dem ersten Verteilermaterial aufliegt. Vielmehr können zwischen den genannten Lagen weitere Lagen angeordnet sein. Entsprechendes gilt für die Anordnung des zweiten Verteilermediums und des Absaugkanals oberhalb des Kohlenstofffasermaterials.

In einer Ausgestaltung erstreckt sich das in die Form eingelegte erste Verteilermedium mindestens über die zweite Breite. Es kann insbesondere an seinen beiden Seiten bündig mit dem Kohlenstofffasermaterial abschließen oder an einer oder an beiden Seiten über das Kohlenstofffasermaterial überstehen. Dadurch wird erreicht, dass sich das flüssige Kunststoffmaterial unter der gesamten Breite des Kohlenstofffasermaterials schnell und gleichmäßig verteilt.

Bei der Erfindung wird das erste Verteilermedium oberhalb der mindestens einen Lage des ersten Fasermaterials in die Form eingelegt wird. Dadurch befindet es sich relativ nahe an den Lagen des Kohlenstofffasermaterials.

In einer Ausgestaltung wird das erste Verteilermedium unterhalb der mindestens einen Lage des ersten Fasermaterials in die Form eingelegt wird. Es kann insbesondere als unterste Lage, gegebenenfalls oberhalb eines Gelcoats, Abreißgewebes und/oder sonstigen Trennmittels, in die Form eingelegt werden. Dies ermöglicht eine Oberflächenbearbeitung des ausgehärteten Windenergieanlagenrotorblattteils ohne strukturell bedeutsame Lagen zu beeinträchtigen. Beispielsweise können Unregelmäßigkeiten in der Oberfläche herausgeschliffen werden, ohne eine der Lagen des ersten Fasermaterials anzutasten.

In einer Ausgestaltung wird der Strömungswiderstand, den das erste Fasermaterial und das erste Verteilermedium dem flüssigen Kunststoffmaterial entgegensetzen, so gewählt und auf den Strömungswiderstand des Kohlenstofffasermaterials abgestimmt, dass sich innerhalb des Kohlenstofffasermaterials eine im wesentlichen ebene, sich horizontal über die zweite Breite erstreckende Fließfront ausbildet. Der Strömungswiderstand ist für die Ausbreitungsgeschwindigkeit des Kunststoffmaterials, d.h. insbesondere der von dem sich ausbreitenden Kunststoffmaterial ausgebildeten Fließfront, maßgeblich. Er wird von der Struktur des ersten Fasermaterials, insbesondere vom Durchmesser der verwendeten Fasern und deren Anordnung bzw. von der Struktur des ersten Verteilermediums bestimmt. Auch die Dicke des Verteilermediums hat Einfluss auf die sich ausbildende Strömungsgeschwindigkeit. Das erste Verteilermedium dient gerade einer Verteilung des flüssigen Kunststoffinaterials und weist daher definitionsgemäß einen relativ geringen Strömungswiderstand auf. Das erste Fasermaterial kann ebenfalls einen relativ geringen Strömungswiderstand aufweisen, beispielsweise bei Verwendung von Glasfasern mit relativ großen Durchmessern und/oder einer beispielsweise gewebten oder geflochtenen, bi- oder multidirektionalen Anordnung. Die genannten Einflussfaktoren werden so gewählt, dass sich in den unterhalb des Kohlenstofffasermaterials angeordneten Lagen ein relativ geringer Strömungswiderstand einstellt und diese Lagen somit in relativ kurzer Zeit mit dem Kunststofmaterial durchtränkt werden. Der Strömungswiderstand des Kohlenstofffasermaterials ist wegen der üblicherweise verwendeten geringeren Durchmesser der Kohlenstofffasern und/oder der im wesentlichen unidirektionalen Ausrichtung dieser Fasern in Längsrichtung des Hauptgurts in der Regel wesentlich größer als der Strömungswiderstand im Bereich der übrigen Materiallagen. Innerhalb des Kohlenstofffasermaterials bereitet sich die Fließfront daher deutlich langsamer aus. Bei der beanspruchten Abstimmung der Strömungswiderstände aufeinander führt dies dazu, dass die Durchtränkung des Kohlenstofffasermaterials von der gesamten Unterseite des Kohlenstofffasermaterials ausgehend im Wesentlichen zum gleichen Zeitpunkt beginnt. Dann bildet sich im Wesentlichen eine ebene, sich horizontal über die zweite Breite erstreckende Fließfront innerhalb des Kohlenstofffasermaterials aus. Dies begünstigt eine gleichmäßige und vollständige Durchtränkung des Kohlenstofffasermaterials.

In einer Ausgestaltung sind der Strömungswiderstand, den das erste Fasermaterial und das erste Verteilermedium dem flüssigen Kunststoffmaterial entgegensetzen, und die Viskosität des flüssigen Kunststoffmaterials so aufeinander abgestimmt, dass die mindestens eine Lage des ersten Fasermaterials und das erste Verteilermedium innerhalb von 60 Sekunden oder weniger nach dem ersten Austreten des flüssigen Kunststoffmaterials aus den Angusskanälen vollständig mit dem flüssigen Kunststoffmaterial durchtränkt sind. Bevorzugt kann das Durchtränken der genannten Materiallagen noch schneller erfolgen, beispielsweise innerhalb von 30 Sekunden, 20 Sekunden, 10 Sekunden oder weniger. Im Gegensatz zu diesen kurzen Zeiträumen dauert die Durchtränkung des Kohlenstofffasermaterials wesentlich länger, beispielsweise länger als 5 Minuten, 10 Minuten, 15 Minuten, 20 Minuten, 30 Minuten oder länger. Die relativ langsame Durchtränkung des Kohlenstofffasermaterials beginnt daher in der Mitte der Unterseite des Kohlenstofffasermaterials, an der sie am spätestens einsetzt, nur kurze Zeit nachdem die Durchtränkung an den Rändern der Unterseite des Kohlenstofffasermaterials beginnt. Innerhalb dieser kurzen Zeit pflanzt sich die Fließfront innerhalb des Kohlenstofffasermaterials nach oben nur geringfügig fort, beispielsweise um weniger als 5 mm, weniger als 2 mm oder weniger als 1 mm. Es bildet sich daher auch in dieser Ausgestaltung eine im Wesentlichen ebene, horizontal über die zweite Breite erstreckte Fließfront innerhalb des Kohlenstofffasermaterials aus. Dies fördert wiederum eine gleichmäßige Durchtränkung des Kohlenstofffasermaterials.

In einer Ausgestaltung steht das Kohlenstofffasermaterial seitlich nicht über das erste Verteilermedium über. Zu diesem Zweck weist das erste Verteilermedium mindestens die zweite Breite auf. Es kann beispielsweise mittig unterhalb des Kohlenstofffasermaterials angeordnet sein. Diese Anordnung des ersten Verteilermediums trägt dazu bei, dass das flüssige Kunststoffmaterial eine von der gesamten Unterseite des Kohlenstofffasermaterials im Wesentlichen zum gleichen Zeitpunkt ausgehende Fließfront ausbilden kann.

In einer Ausgestaltung werden beim Anordnen der Angusskanäle im Bereich der Anschlussabschnitte Austrittsöffnungen der Angusskanäle oberhalb oder seitlich der Anschlussabschnitte angeordnet. Die Austrittsöffnungen können in einem Abstand von dem Kohlenstofffasermaterial angeordnet werden. Dadurch wird erreicht, dass das flüssige Kunststoffmaterial von den Anschlussabschnitten ausgehend zu dem Kohlenstofffasermaterial gelangt. Einer vorzeitigen Ausbildung einer Fließfront, insbesondere in einem seitlichen Bereich des Kohlenstofffasermaterials, wird entgegengewirkt.

In einer Ausgestaltung wird oberhalb der Anschlussabschnitte ein drittes Verteilermedium angeordnet, das bis an das erste Verteilermedium heranreicht, und beim Anordnen der Angusskanäle im Bereich der Anschlussabschnitte werden Austrittsöffnungen der Angusskanäle unmittelbar angrenzend an das dritte Verteilermedium angeordnet. Unterhalb des dritten Verteilermediums kann ein Abreißgewebe angeordnet werden, so dass das dritte Verteilermedium nach dem Aushärten des flüssigen Kunststoffmaterials wieder von dem Windenergieanlagenbauteil entfernt werden kann. Durch das dritte Verteilermedium wird ein gleichmäßiger und großflächiger Eintrag des flüssigen Kunststoffmaterials im Bereich der Anschlussabschnitte erreicht. Dies begünstigt weiter eine schnelle und gleichmäßige Durchtränkung des Windenergieanlagenrotorblattteils mit dem flüssigen Kunststoffmaterial, insbesondere des ersten Verteilermediums und der mindestens einen Lage des ersten Fasermaterials.

In einer Ausgestaltung weist die Vielzahl von Lagen des Kohlenstofffasermaterials eine Dicke von 20 mm oder mehr auf. Dies gilt mindestens in einem Längsabschnitt des Windenergieanlagenrotorblattteils und entspricht der Dicke des Hauptgurts, welche über die Länge des Hauptgurts variieren kann. In anderen Längsabschnitten kann die Dicke beispielsweise weniger als 1 mm betragen, oder bis zu 40 mm oder mehr. Das Verfahren ist zur Fertigung von Windenergieanlagenbauteilen mit relativ dicken Hauptgurten besonders geeignet. Die Dicke kann auch 45 mm oder mehr oder 50 mm oder mehr betragen.

In einer Ausgestaltung wird oberhalb des zweiten Verteilermediums eine Druckplatte in die Form eingelegt. Die Druckplatte kann auf ihrer Unterseite eine glatte, vorzugsweise im Wesentlichen ebene Oberfläche aufweisen. Diese wird durch das ausgebildete Vakuum in der Form gleichmäßig auf die Anordnung der unterschiedlichen Fasermaterialien und Verteilermedien gepresst. Die Druckplatte kann Teil eines Druckstücks sein, in das der mindestens eine Absaugkanal und/oder das zweite Verteilermedium integriert sind. Dieses Druckstück oder die Druckplatte kann insbesondere die zweite Breite der Vielzahl von Lagen des Kunststofffasermaterials aufweisen, oder schmaler ausgeführt sein. Die Druckplatte bzw. das Druckstück können nach dem Aushärten des flüssigen Kunststoffmaterials von dem Windenergieanlagenbauteil entfernt werden, beispielsweise unter Verwendung eines zwischen Druckplatte bzw. Druckstück und der Vielzahl von Lagen des Kohlenstofffasermaterials angeordneten Abreißgewebes oder einer semipermeablen Membran (VAT-Folie). Durch die Verwendung einer Druckplatte wird eine glatte Oberfläche der Oberseite des Hauptgurts erreicht und einer Ausbildung von Wellen oder Falten in dem Kohlenstofffasermaterial wird entgegengewirkt. Dies ist wichtig für die Festigkeit des Hauptgurts und insbesondere für eine problemlose Verbindung des Hauptgurts mit einem oberhalb des Hauptgurts angeordneten, sich in Längsrichtung des Rotorblatts erstreckenden Stegs.

In einer Ausgestaltung werden beim Einlegen der mindestens einen Lage des ersten Fasermaterials mehrere Lagen des ersten Fasermaterials eingelegt, wobei mindestens eine der Lagen die erste Breite aufweist und mindestens eine, oberhalb dieser Lage angeordnete weitere Lage eine dritte Breite aufweist, die geringer ist als die erste Breite und größer als die zweite Breite, so dass mindestens einer der Anschlussabschnitte eine Stufe aufweist. Insbesondere können beide Anschlussabschnitte eine auf diese Weise ausgebildete Stufe aufweisen. Die stufenförmige Ausbildung der Anschlussabschnitte kann die Verbindung des Windenergieanlagenrotorblattteils mit seitlich davon angeordneten Außenschalenabschnitten im Bereich der Anschlussabschnitte vereinfachen. Die angefügten Außenschalenabschnitte können ebenfalls aus einer Vielzahl von Materiallagen aufgebaut werden, die die stufenförmigen Anschlussabschnitte komplementär überlappen.

In einer Ausgestaltung weist das erste Verteilermedium ein textiles Verteilermedium auf. Unter einem textilen Verteilermedium wird ein flexibles Material verstanden, dass aus einem Verbund einer Vielzahl von Fasern, insbesondere aus Glasfasern, besteht. Es kann insbesondere ein Gewebe, ein Gewirk oder eine Wirrfasermatte sein. Wirrfasermatten aus Glasfasern werden auch als CSM-Matten (*chopped stranded fibreglass mat*) bezeichnet. Wegen der ungeordneten Orientierung der Fasern, die zudem eine relativ geringe Länge aufweisen können, weisen derartige Matten zwischen den Fasern relativ große Freiräume auf, sodass sie in unterschiedlichen Strömungsrichtungen einfach durchtränkt werden können und eine optimale Verteilung des flüssigen Kunststoffmaterials bewirken. Gleichzeitig verbinden sich derartige Wirrfasermatten, insbesondere bei Verwendung von Glasfasern, optimal mit dem flüssigen Kunststoffmaterial, sodass eine feste Verbindung der benachbarten Materiallagen erreicht wird.

In einer Ausgestaltung weist das erste Verteilermedium ein elektrisch leitfähiges Material auf. Bei dem elektrisch leitfähigen Material kann es sich insbesondere um ein Metall handeln, beispielsweise ein Geflecht aus Stahl- und/oder Kupferdrähten oder um ein Kupfergitter. Das erste Verteilermedium kann auch mehrere Materialien kombinieren, etwa eine Wirrfasermatte aus Glasfasern mit darin eingearbeiteten Metalldrähten oder mit einem benachbart angeordneten Metallgitter, insbesondere aus Kupfer. Das erste Verteilermedium kann auch ausschließlich aus dem elektrisch leitfähigen Material bestehen, da beispielsweise ein Kupfergitter oder ein Geflecht aus Metallfasern oder -drähten aufgrund seiner Struktur, insbesondere unter Verwendung von Drähten mit relativ großem Durchmesser, eine ausreichende Verteilungswirkung für das flüssige Kunststoffmaterial entfalten kann. Durch das elektrisch leitfähige Material wird ein wirksamer Blitzschutz in das Windenergieanlagenrotorblattteil integriert. Dies geschieht unmittelbar bei der Fertigung des Windenergieanlagenrotorblattteils, sodass es keines gesonderten Arbeitsschritts bedarf. Außerdem wird die Festigkeit des Teils durch den Blitzschutz nicht beeinträchtigt und der Blitzschutz wird unlösbar mit dem Windenergieanlagenrotorblattteil verbunden.

In einer Ausgestaltung wird zwischen dem elektrisch leitfähigen Material und dem Kohlenstofffasermaterial mindestens eine Lage eines elektrisch nicht leitfähigen Fasermaterials angeordnet. Dabei kann es sich beispielsweise um eine weitere Lage des ersten Fasermaterials handeln, insbesondere eine Lage aus Glasfasern. Es wird eine wirksame elektrische Isolation zwischen dem elektrisch leitfähigen Material und dem ebenfalls elektrisch leitfähigen Kohlenstoffgurt erzielt. Eine Beschädigung des Kohlenstoffgurts bei einem Blitzschlag kann dadurch vermieden werden.

In einer Ausgestaltung wird das bislang erläuterte Verfahren zur Herstellung einer Halbschale eines Windenergieanlagenrotorblatts eingesetzt. Das so ausgestaltete Verfahren weist die folgenden Schritte auf:
- Herstellen eines Windenergieanlagenrotorblattteils mit einem kohlenstofffaserverstärkten Hauptgurt gemäß dem Verfahren nach einem der Ansprüche 1 bis 13,
- Entnehmen des Windenergieanlagenrotorblattteils aus der Form,
- Einlegen des Windenergieanlagenrotorblattteils in eine Halbschalenform,
- Einlegen einer Vielzahl von Lagen eines Fasermaterials in die Halbschalenform an beiden Seiten des Windenergieanlagenrotorblattteils und zumindest teilweise auf die Anschlussabschnitte,
- Schließen der Halbschalenform mit einer Vakuumfolie,
- Infundieren eines flüssigen, aushärtenden Kunststoffmaterials in einem Vakuum-Infusionsverfahren.

Im ersten Verfahrensschritt wird ein Windenergieanlagenrotorblattteil entsprechend dem vorstehend erläuterten Verfahren hergestellt. Auf die vorstehenden Erläuterungen hierzu wird verwiesen.

Anschließend wird das so gefertigte Windenergieanlagenrotorblattteil aus der Form entnommen und in eine Halbschalenform eingelegt. Bei der Halbschalenform kann es sich um eine herkömmliche Form handeln, in der eine Halbschale für ein Windenergieanlagenrotorblatt gefertigt wird. Derartige Halbschalenformen werden verwendet zur Herstellung der druckseitigen Unterschalen und der saugseitigen Oberschalen von Windenergieanlagenrotorblättem. Ein langgestreckter Abschnitt der inneren Fläche der Halbschalenform kann identisch geformt sein wie die zur Herstellung des Windenergieanlagenrotorblattteils verwendete Form, sodass das vorgefertigte Windenergieanlagenrotorblattteil mit dem kohlenstofffaserverstärkten Hauptgurt passgenau in die Halbschalenform eingelegt werden kann. Die mindestens eine erste Lage des Windenergieanlagenrotorblattteils bildet dann einen Teil der äußeren Fläche der zu fertigenden Halbschale und grenzt im Wesentlichen an die Innenseite der Halbschalenform an.

In weiteren Verfahrensschritten wird an beiden Seiten des Windenergieanlagenrotorblattteils und zumindest teilweise auf die Anschlussabschnitte eine Vielzahl von Lagen eines Fasermaterials in die Halbschalenform eingelegt. Hierfür kann bevorzugt das erste Fasermaterial verwendet werden, insbesondere Glasfasern, sodass ein materialeinheitlicher Anschluss an die Anschlussabschnitte bzw. die von dem Windenergieanlagenrotorblattteil gebildeten Teile der Außenschale entsteht. Die in die Halbschalenform eingelegte Vielzahl von Lagen des Fasermaterials bildet weitere Abschnitte der zu fertigenden Halbschale, die im Wesentlichen in Längsrichtung des Rotorblatts bzw. der Halbschalenform verlaufen.

Anschließend wird die Halbschalenform geschlossen, insbesondere mit einer Vakuumfolie. Die Folie kann mit Rändern der Halbschalenform luftdicht verbunden werden und ebenso mit oberen/seitlichen Rändern des vorgefertigten Windenergieanlagenrotorblattteils. Alternativ kann das gesamte Windenergieanlagenrotorblattteil mit einer Vakuumfolie abgedeckt werden.

In einem letzten Verfahrensschritt wird ein flüssiges, aushärtendes Kunststoffmaterial in einem Vakuum-Infusionsverfahren infundiert. Geeignet sind grundsätzlich beispielsweise die eingangs erläuterten Vakuum-Infusionsverfahren. Auf diese Weise wird das flüssige, aushärtende Kunststoffmaterial, das bevorzugt mit dem zur Herstellung des Windenergieanlagenrotorblattteils verwendeten Kunststoffmaterial identisch ist, gleichmäßig in der Form verteilt und durchtränkt die in die Halbschalenform eingelegten Lagen des Fasermaterials gleichmäßig. Es gelangt insbesondere bis unmittelbar an die Anschlussabschnitte des Windenergieanlagenrotorblattteils heran, sodass die in die Halbschalenform eingelegten Lagen des Fasermaterials fest und dauerhaft mit dem Windenergieanlagenrotorblattteil verbunden werden.

Auf die geschilderte Weise können Halbschalen für Windenergieanlagenrotorblätter besonders sicher und zuverlässig hergestellt werden. Der Prozess ist gut kontrollierbar und es können bis zur Fertigstellung der Halbschale und danach im Wesentlichen die herkömmlichen Produktionstechniken und -einrichtungen verwendet werden.

Die Erfindung wird nachfolgend anhand eines in zwei Figuren dargestellten Ausführungsbeispiels näher erläutert. Es zeigen:
- Fig. 1: ein mit dem erfindungsgemäßen Verfahren hergestelltes Windenergieanlagenrotorblattteil beim Einlegen in eine Halbschalenform in einer stark vereinfachten, schematischen Darstellung,
- Fig. 2: ein Windenergieanlagenrotorblattteil in einer Form im Querschnitt in einer schematischen, vereinfachten Darstellung.

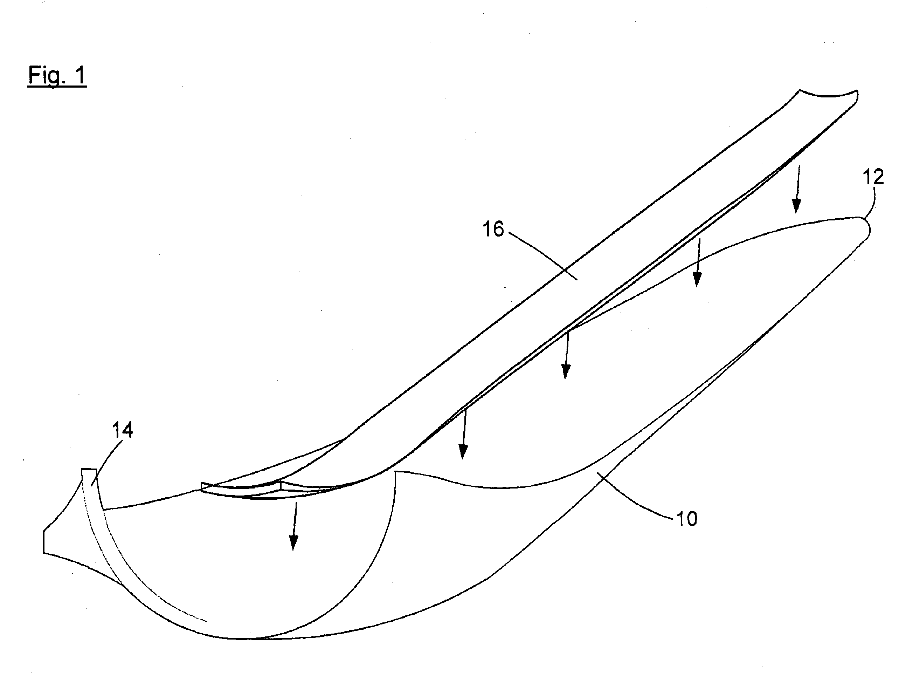

In Figur 1 erkennt man eine Halbschalenform 10 mit einem blattspitzenseitigen Ende 12 und einem blattwurzelseitigen Ende 14. Das blattwurzelseitige Ende 14 der Halbschalenform 10 bildet im Querschnitt einen Halbkreis. Die Gesamtlänge der Halbschalenform 10 beträgt beispielsweise 40 m oder mehr, 50 m oder mehr oder gar 60 m oder mehr. Bei derart großen Windenergieanlagenrotorblättern ist aus Festigkeits- und Gewichtsgründen häufig die Verwendung von kohlenstofffaserverstärkten Hauptgurten sinnvoll.

Die Figur illustriert, wie ein Windenergieanlagenrotorblattteil 16, das entsprechend dem erfindungsgemäßen Verfahren gefertigt wurde, in die Halbschalenform 10 eingelegt wird. Das Windenergieanlagenrotorblattteil 16 erstreckt sich annähernd über die gesamte Länge der Halbschalenform 10, weist jedoch eine geringere Breite, gemessen in Richtung der Profiltiefe, auf. Entlang seiner in Längsrichtung verlaufenden Vorder- und Hinterkanten weist das Windenergieanlagenrotorblattteil 16 flächig ausgebildete Anschlussabschnitte auf, die in der Figur 1 nicht dargestellt sind. Derartige Anschlussabschnitte können auch an dem dem blattspitzenseitigen Ende 12 der Halbschalenform 10 zugewandten Ende des Windenergieanlagenrotorblattteils 16, also entlang der gekrümmten, in der Figur 1 oben rechts dargestellten Kante, ausgebildet sein, sowie an der ebenfalls gekrümmten, dem blattwurzelseitigen Ende 14 der Halbschalenform 10 zugewandten Ende des Windenergieanlagenrotorblattteils 16, gebildet von der dem Betrachter zugewandten Kante.

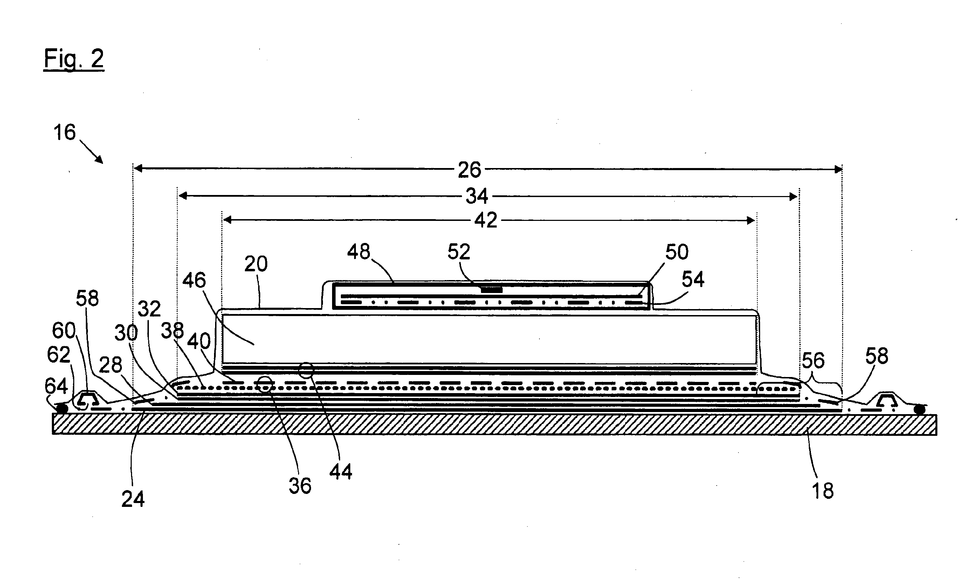

Weitere Einzelheiten des Windenergieanlagenrotorblattteils 16 sind besser aus der Figur 2 ersichtlich. Diese Figur zeigt im Querschnitt die Fertigung des Windenergieanlagenrotorblattteils 16 in einer hierfür verwendeten Form 18. In der Figur 2 ist diese Form 18 eben dargestellt, tatsächlich ist sie jedoch entsprechend der äußeren Kontur des zu fertigenden Windenergieanlagenrotorblattteils 16 gekrümmt. Die Figur zeigt den Zustand des Windenergieanlagenrotorblattteils 16 nach dem Einlegen der unterschiedlichen Materiallagen in die Form, dem Abdecken der Form mit einer Vakuumfolie 20 und dem Evakuieren der Form über einen Absaugkanal 52, vor dem Angießen eines flüssigen Kunststoffmaterials. In diesem Zustand befinden sich in der Form 18 im Einzelnen die folgenden Elemente.

An der Blattaußenseite in der Form 18 befinden sich insgesamt vier Lagen eines ersten Fasermaterials, im Beispiel bidirektionale Glasfasergewebe, die als durchgezogene Linien dargestellt sind. Vor dem Einlegen dieser Lagen des ersten Fasermaterials wurde die Form 18 mit einem Trennmittel versehen, das ein einfaches Entnehmen des fertigen Windenergieanlagenrotorblattteils aus der Form 18 nach dem Aushärten des Kunststoffmaterials ermöglicht.

Die unterste Lage 24 des ersten Fasermaterials weist eine erste Breite 26 auf, die im Beispiel 60 cm beträgt. Die zweite, darüber angeordnete Lage 28 des ersten Fasermaterials ist etwas schmaler. Oberhalb davon sind eine dritte Lage 30 und eine vierte Lage 32 des ersten Fasermaterials angeordnet. Die dritte und vierte Lage 30, 32 weisen jeweils eine dritte Breite 34 auf, die geringer ist als die erste Breite 26 und die nicht mit einem Bezugszeichen versehene Breite der zweiten Lage 28. Zwischen der dritten/vierten Lage 32, 34 und der zweiten Lage 28 sowie zwischen der zweiten Lage 28 und der ersten Lage 24 ist daher jeweils eine Stufe ausgebildet.

Oberhalb der vierten Lage 32 des ersten Fasermaterials ist ein erstes Verteilermedium 36 angeordnet. Das erste Verteilermedium 36 umfasst ein textiles Verteilermedium in Form einer Wirrfasermatte 38 aus Glasfasern, die sich über die gesamte Breite des ersten Verteilermediums 36, nämlich über die dritte Breite 34, erstreckt. Außerdem weist das erste Verteilermedium 36 ein elektrisch leitfähiges Material auf, im Beispiel in Form eines Kupfergitters 40, das oberhalb der Wirrfasermatte 38 angeordnet ist. Das Kupfergitter 40 weist eine zweite Breite 42 auf, die geringer ist als die dritte Breite 34 und im Beispiel etwa 40 cm beträgt.

Diese zweite Breite 42 weisen auch zwei weitere Lagen 44 des ersten Fasermaterials auf, die oberhalb des Kupfergitters 40 angeordnet sind. Diese Lagen 44 bilden eine Isolationsschicht zwischen dem Kupfergitter 40 und dem oberhalb der beiden Lagen 44 des ersten Fasermaterials angeordneten Vielzahl von Lagen eines Kohlenstofffasermaterials 46. Das Kohlenstofffasermaterial 46 weist ebenfalls die zweite Breite 42 auf. Es besteht aus Kohlenstofffasern mit im Vergleich zu den Glasfasern des ersten Fasermaterials geringem Durchmesser und mit im Wesentlichen in Längsrichtung des Windenergieanlagenrotorblattteils 16 gerichtetem, unidirektionalen Faserverlauf. Die Dicke des Kohlenstofffasermaterials 46 beträgt insgesamt etwa 50 mm.

Oberhalb des Kohlenstofffasermaterials 46 befindet sich ein Druckstück 48. Dieses weist eine Druckplatte 50 mit einer im Wesentlichen ebenen, unteren Fläche auf. Die Breite der Druckplatte 50 und des Druckstücks 48 ist etwas geringer als die zweite Breite 42. Außerdem umfasst das Druckstück 48 einen oberhalb der Druckplatte 50 angeordneten Absaugkanal. Unterhalb des Absaugkanals 52 weist die Druckplatte 50 nicht dargestellte Öffnungen auf, die den Absaugkanal 52 mit einem unterhalb der Druckplatte 50 angeordneten, zweiten Verteilermedium 54 verbinden. Das zweite Verteilermedium 54 gehört ebenfalls zum Druckstück 48 und liegt im Wesentlichen auf dem Kohlenstofffasermaterial 46 auf, wobei zwischen dem zweiten Verteilermedium 54 und dem Kohlenstofffasermaterial 46 ein geeignetes Trennmittel, beispielsweise ein Abreißgewebe und/oder eine semipermeable Membran, angeordnet ist. Dies ist in der Figur nicht dargestellt. Das Druckstück kann vollständig von der semipermeablen Membran umschlossen sein. Als zweite nicht dargestellte Variante kann die Membran auch den gesamten Aufbau abdecken. Dabei ist die Membran schmaler als die Vakuumfolie 20.

Die über die zweite Breite 42 des Kohlenstofffasermaterials 46 seitlich überstehenden Abschnitte des ersten Fasermaterials der untersten Lage 24, der zweiten Lage 28, der dritten Lage 32 und der vierten Lage 34 bilden Anschlussabschnitte 56. Die Anschlussabschnitte 56 sind zu beiden Seiten des von dem Kohlenstofffasermaterial 46 gebildeten Hauptgurts angeordnet, weisen jeweils eine Breite von etwa 10 cm auf und erstrecken sich in Längsrichtung des Windenergieanlagenrotorblattteils 16 im Wesentlichen über dessen gesamte Länge.

Die Anschlussabschnitte 56 werden teilweise überdeckt von einem dritten Verteilermedium 58, das in der Figur strichpunktiert dargestellt ist und oberhalb der Anschlussabschnitte 56 und seitlich davon angeordnet ist. Es reicht bis an das erste Verteilermedium 36 heran und überlappt die Wirrfasermatte 38 des ersten Verteilermediums 36 teilweise. Außerdem erstreckt es sich über die von den unterschiedlichen Lagen 24, 28, 30, 32 des ersten Fasermaterials ausgebildeten Stufen der Anschlussabschnitte 56 und erstreckt sich seitlich über die erste Breite 26 der untersten Lage 24 des ersten Fasermaterials hinaus, wo es im Wesentlichen unmittelbar auf der Form 18 aufliegt. Unterhalb des dritten Verteilermediums 58 kann ein geeignetes Trennmittel angeordnet sein, insbesondere ein Abweisgewebe. Dies ist in der Figur nicht dargestellt. Es ermöglicht ein Entfernen des dritten Verteilermediums nach dem Aushärten des flüssigen Kunststoffmaterials.

Zur Infusion des flüssigen Kunststoffmaterials sind oberhalb des dritten Verteilermediums 58 auf beiden Seiten der Form 18 Angußkanäle 60 ausgebildet, die Austrittsöffnungen 62 aufweisen. Die Austrittsöffnungen 62 sind in der Figur nach unten gerichtet, sodass das aus diesen Austrittsöffnungen 62 austretende, flüssige Kunststoffmaterial unmittelbar auf das dritte Verteilermedium 58 gelangt und sich darin ausbreitet.

Die bereits angesprochene Vakuumfolie 20 überdeckt die gesamte Anordnung einschließlich des Druckstücks 48 und der Angußkanäle 60 und ist an beiden Seiten über jeweils eine Dichtung 64 luftdicht mit der Form 18 verbunden.

Innerhalb der von der Vakuumfolie 20 geschlossenen Form 18 gebildet sich ein Vakuum bzw. ein starker Unterdruck, der durch Absaugen der Luft über den Absaugkanal 52 entsteht. Die Absaugung erfolgt weiterhin relativ großflächig durch Verteilung über das zweite Verteilermedium 54 innerhalb des Druckstücks 48.

Die Infusion des flüssigen Kunststoffmaterials erfolgt über die Angusskanäle 60. Von dort gelangt das flüssige Kunststoffmaterial über die Austrittsöffnungen 62 in das dritte Verteilermedium 58 und verteilt sich weiter innerhalb der unterschiedlichen Lagen 24, 28, 30, 32 des ersten Fasermaterials und innerhalb der Wirrfasermatte 38 und des Kupfergitters 40 des ersten Verteilermediums 36. Dieser Verteilungsvorgang verläuft wegen des relativ geringen Strömungswiderstands dieser Materiallagen sehr schnell, beispielsweise innerhalb von 20 Sekunden oder weniger. Auch die beiden oberhalb des ersten Verteilermediums 36 angeordneten Lagen 44 des ersten Kunststoffmaterials werden sehr schnell durchtränkt. Es bildet sich daher eine im Wesentlichen ebene, horizontal angeordnete Fließfront aus, die das Kohlenstofffasermaterial 46 gleichmäßig und mit Strömungsrichtung von unten nach oben durchtränkt. Dieser Durchtränkungsvorgang dauert wesentlich länger, beispielsweise 15 Minuten oder mehr.

### Liste der verwendeten Bezugszeichen:

- 10: Halbschalenform
- 12: blattspitzenseitiges Ende
- 14: blattwurzelseitiges Ende
- 16: Windenergieanlagenrotorblattteil
- 18: Form
- 20: Vakuumfolie
- 24: unterste Lage des ersten Fasermaterials
- 26: erste Breite
- 28: zweite Lage des ersten Fasermaterials
- 30: dritte Lage des ersten Fasermaterials
- 32: vierte Lage des ersten Fasermaterials
- 34: dritte Breite
- 36: erstes Verteilermedium
- 38: Wirrfasermatte
- 40: Kupfergitter
- 42: zweite Breite
- 44: weitere Lagen des ersten Fasermaterials
- 46: Kohlenstofffasermaterial
- 48: Druckstück
- 50: Druckplatte
- 52: Absaugkanal
- 54: zweites Verteilermedium
- 56: Anschlussabschnitt
- 58: drittes Verteilermedium
- 60: Angusskanal
- 62: Austrittsöffnung
- 64: Dichtung

## Patentansprüche

1. Verfahren zur Herstellung eines Windenergieanlagenrotorblattteils (16) mit einem kohlenstofffaserverstärkten Hauptgurt, das die folgenden Schritte aufweist:
• Bereitstellen einer Form (18),
• Einlegen mindestens einer Lage (24) eines ersten Fasermaterials in die Form (18), wobei sich das erste Fasermaterial über eine erste Breite (26) erstreckt,
• Einlegen eines ersten Verteilermediums (36) oberhalb der mindestens einen Lage (24) des ersten Fasermaterials in die Form (18),
• Einlegen einer Vielzahl von Lagen eines Kohlenstofffasermaterials (46) oberhalb des ersten Verteilermediums (36) in die Form (18), wobei sich die Lagen des Kohlenstofffasermaterials (46) über eine zweite Breite (42) erstrecken, die kleiner ist als die erste Breite (26), so dass auf beiden Seiten des Kohlenstofffasermaterials (46) Anschlussabschnitte (56) des ersten Fasermaterials über das Kohlenstofffasermaterial (46) überstehen, wobei sich das Kohlenstofffasermaterial (46) von dem ersten Fasermaterial unterscheidet,
• Einlegen eines zweiten Verteilermediums (54) und Anordnen mindestens eines Absaugkanals (52) oberhalb des Kohlenstofffasermaterials (46),
• Anordnen von Angusskanälen (60) im Bereich der Anschlussabschnitte (56),
• Schließen der Form (18),
• Absaugen der Luft aus der Form (18) durch den mindestens einen Absaugkanal (52) und
• Angießen eines flüssigen, aushärtenden Kunststoffmaterials durch die Angusskanäle (60).

2. Verfahren nach Anspruch 1, **dadurch gekennzeichnet, dass** sich das in die Form (18) eingelegte erste Verteilermedium (36) mindestens über die zweite Breite (42) erstreckt.

3. Verfahren nach einem der Ansprüche 1 bis 2, **dadurch gekennzeichnet, dass** der Strömungswiderstand, den das erste Fasermaterial und das erste Verteilermedium (36) dem flüssigen Kunststoffmaterial entgegensetzen, so gewählt und auf den Strömungswiderstand des Kohlenstofffasermaterials (46) abgestimmt ist, dass sich innerhalb des Kohlenstofffasermaterials (46) eine im Wesentlichen ebene, sich horizontal über die zweite Breite (42) erstreckende Fließfront ausbildet.

4. Verfahren nach einem der Ansprüche 1 bis 3, **dadurch gekennzeichnet, dass** der Strömungswiderstand, den das erste Fasermaterial und das erste Verteilermedium (36) dem flüssigen Kunststoffmaterial entgegensetzen, und die Viskosität des flüssigen Kunststoffmaterials so aufeinander abgestimmt sind, dass die mindestens eine Lage (24) des ersten Fasermaterials und das erste Verteilermedium (36) innerhalb von 60 s oder weniger nach dem ersten Austreten des flüssigen Kunststoffmaterials aus den Angusskanälen (60) vollständig mit dem flüssigen Kunststoffmaterial durchtränkt sind.

5. Verfahren nach einem der Ansprüche 1 bis 4, **dadurch gekennzeichnet, dass** das Kohlenstofffasermaterial (46) seitlich nicht über das erste Verteilermedium (36) übersteht.

6. Verfahren nach einem der Ansprüche 1 bis 5, **dadurch gekennzeichnet, dass** beim Anordnen der Angusskanäle (60) im Bereich der Anschlussabschnitte (56) Austrittsöffnungen (62) der Angusskanäle (60) oberhalb oder seitlich der Anschlussabschnitte (56) angeordnet werden.

7. Verfahren nach einem der Ansprüche 1 bis 6, **dadurch gekennzeichnet, dass** oberhalb der Anschlussabschnitte (56) ein drittes Verteilermedium (58) angeordnet wird, dass bis an das erste Verteilermedium (36) heranreicht, und beim Anordnen der Angusskanäle (60) im Bereich der Anschlussabschnitte (56) Austrittsöffnungen (62) der Angusskanäle (60) unmittelbar angrenzend an das dritte Verteilermedium (58) angeordnet werden.

8. Verfahren nach einem der Ansprüche 1 bis 7, **dadurch gekennzeichnet, dass** die Vielzahl von Lagen des Kohlenstofffasermaterials (46) eine Dicke von 20 mm oder mehr aufweist.

9. Verfahren nach einem der Ansprüche 1 bis 8, **dadurch gekennzeichnet, dass** oberhalb des zweiten Verteilermediums (54) eine Druckplatte (50) in die Form (18) eingelegt wird.

10. Verfahren nach einem der Ansprüche 1 bis 9, **dadurch gekennzeichnet, dass** beim Einlegen der mindestens einen Lage (24) des ersten Fasermaterials mehrere Lagen (24, 28, 30, 32) des ersten Fasermaterials eingelegt werden, wobei mindestens eine der Lagen die erste Breite (26) aufweist und mindestens eine, oberhalb dieser Lage angeordnete weitere Lage (30, 32) eine dritte Breite (34) aufweist, die geringer ist als die erste Breite (26) und größer als die zweite Breite (42), so dass mindestens einer der Anschlussabschnitte (56) eine Stufe aufweist.

11. Verfahren nach einem der Ansprüche 1 bis 10, **dadurch gekennzeichnet, dass** das erste Verteilermedium (36) ein textiles Verteilermedium (38) aufweist.

12. Verfahren nach einem der Ansprüche 1 bis 11, **dadurch gekennzeichnet, dass** das erste Verteilermedium (36) ein elektrisch leitfähiges Material aufweist.

13. Verfahren nach Anspruch 12, **dadurch gekennzeichnet, dass** zwischen dem elektrisch leitfähigen Material und dem Kohlenstofffasermaterial (46) mindestens eine Lage (44) eines elektrisch nicht leitfähigen Fasermaterials angeordnet wird.

14. Verfahren zur Herstellung einer Halbschale eines Windenergieanlagenrotorblatts mit den folgenden Schritten:
• Herstellen eines Windenergieanlagenrotorblattteils (16) mit einem kohlenstofffaserverstärkten Hauptgurt gemäß dem Verfahren nach einem der Ansprüche 1 bis 13,
• Entnehmen des Windenergieanlagenrotorblattteils (16) aus der Form (18),
• Einlegen des Windenergieanlagenrotorblattteils (16) in eine Halbschalenform (10),
• Einlegen einer Vielzahl von Lagen eines Fasermaterials in die Halbschalenform (10) an beiden Seiten des Windenergieanlagenrotorblattteils (16) und zumindest teilweise auf die Anschlussabschnitte (56),
• Schließen der Halbschalenform (10),
• Infundieren eines flüssigen, aushärtenden Kunststoffmaterials in einem Vakuum-Infusionsverfahren.

## Claims

1. A method for making a wind turbine rotor blade part (16) having a carbon fiber-reinforced main spar cap, said method comprising the steps of:
• providing a mold (18),
• inserting at least one layer (24) of a first fibrous material into the mold (18) wherein the first fibrous material extends over a first width (26),
• inserting a first distribution medium (36) into the mold (18) on top of the at least one layer (24) of the first fibrous material,
• inserting a plurality of layers of a carbon fiber material (46) into the mold (18) above the first distribution medium (36), wherein the layers of the carbon fiber material (46) extend over a second width (42) which is smaller than the first width (26), so that connecting sections (56) of the first fibrous material protrude beyond the carbon fiber material (46) on both sides of the carbon fiber material (46), wherein the carbon fiber material (46) is different from the first fibrous material,
• inserting a second distribution medium (54) and arranging at least one extraction channel (52) above the carbon fiber material (46),
• arranging sprue channels (60) in the region of the connecting sections (56),
• closing the mold (18),
• extracting the air from the mold (18) through the at least one extraction channel (52), and
• feeding a liquid plastics material that hardens through the sprue channels (60).

2. The method of claim 1, **characterized in that** the first distribution medium (36) inserted into the mold (18) extends at least over the second width (42).

3. The method of any of the claims 1 to 2, **characterized in that** the flow resistance exerted by the first fibrous material and the first distribution medium (36) with respect to the liquid plastics material is selected and adjusted appropriately for the flow resistance of the carbon fiber material (46) in such a manner so as to form a flow front, which is essentially flat and extends horizontally over the second width (42), within the carbon fiber material (46).

4. The method of any of the claims 1 to 3, **characterized in that** the flow resistance exerted by the first fibrous material and the first distribution medium (36) with respect to the liquid plastics material, and the viscosity of the liquid plastics material, have been adjusted appropriately for one another in such a manner that the first distribution medium (36) and the at least one layer (24) of the first fibrous material are saturated completely with the liquid plastics material within 60 seconds or less after the first discharge of the liquid plastics material from the sprue channels (60).

5. The method of any of the claims 1 to 4, **characterized in that** the carbon fiber material (46) does not protrude laterally beyond the first distribution medium (36).

6. The method of any of the claims 1 to 5, **characterized in that** on arrangement of the sprue channels (60) in the region of the connecting sections (56) outlet openings (62) of the sprue channels (60) are arranged above, or laterally with respect to, the connecting sections (56).

7. The method of any of the claims 1 to 6, **characterized in that** above the connecting sections (56) a third distribution medium (58) is arranged which extends as far as the first distribution medium (36), and on arrangement of the sprue channels (60) in the region of the connecting sections (56) outlet openings (62) of the sprue channels (60) are arranged immediately adjacent to the third distribution medium (58).

8. The method of any of the claims 1 to 7, **characterized in that** the thickness of the plurality of layers of the carbon fiber material (46) is 20 mm or more.

9. The method of any of the claims 1 to 8, **characterized in that** a pressure plate (50) is inserted into the mold (18) above the second distribution medium (54).

10. The method of any of the claims 1 to 9, **characterized in that** on inserting the at least one layer (24) of the first fibrous material a plurality of layers (24, 28, 30, 32) of the first fibrous material are inserted, wherein at least one of the layers has the first width (26) and at least one further layer (30, 32) arranged above said layer has a third width (34) which is smaller than the first width (26) and greater than the second width (42), so that at least one of the connecting sections (56) has a step.

11. The method of any of the claims 1 to 10, **characterized in that** the first distribution medium (36) includes a textile distribution medium (38).

12. The method of any of the claims 1 to 11, **characterized in that** the first distribution medium (36) includes an electrically conductive material.

13. The method of any of claim 12, **characterized in that** at least one layer (44) of an electrically nonconductive fibrous material is arranged between the electrically conductive material and the carbon fiber material (46).

14. A method for producing a half-shell of a wind turbine rotor blade comprising the steps of:
• producing a wind turbine rotor blade part (16) with a carbon fiber-reinforced main spar cap according to the method of any of the claims 1 to 13,
• removing the wind turbine rotor blade part (16) from the mold (18),
• inserting the wind turbine rotor blade part (16) into a half-shell mold (10),
• inserting a plurality of layers of a fibrous material into the half-shell mold (10) at both sides of the wind turbine rotor blade part (16) and at least partially onto the connecting sections (56),
• closing the half-shell mold (10) and
• infusing a liquid plastics material that hardens in a vacuum infusion process.

## Revendications

1. Procédé de fabrication d'un élément d'âme de rotor d'éolienne (16) doté d'une structure principale renforcée de fibres de carbone, qui présente les étapes suivantes :
• fourniture d'un moule (18),
• insertion d'au moins une couche (24) d'un premier matériau de fibres dans le moule (18), le premier matériau de fibres s'étendant sur une première largeur (26),
• insertion dans le moule (18) d'un premier agent de diffusion (36) au-dessus de la couche (24) au moins au nombre de un du premier matériau de fibres,
• insertion dans le moule (18) d'une multiplicité de couches d'un matériau en fibres de carbone (46) au-dessus du premier agent de diffusion (36), les couches du matériau en fibres de carbone (46) s'étendant sur une deuxième largeur (42) qui est plus petite que la première largeur (26), de telle sorte que, sur les deux côtés du matériau en fibres de carbone (46), des tronçons de raccordement (56) du premier matériau de fibres dépassent au-dessus du matériau en fibres de carbone (46), le matériau en fibres de carbone (46) se distinguant du premier matériau de fibres,
• insertion d'un deuxième agent de diffusion (54) et disposition d'au moins un canal d'aspiration (52) au-dessus du matériau en fibres de carbone (46),
• disposition de canaux d'injection (60) dans la zone des tronçons de raccordement (56),
• fermeture du moule (18),
• aspiration de l'air hors du moule (18) à travers le canal d'aspiration (52) au moins au nombre de un, et
• injection d'une matière plastique liquide durcissable à travers les canaux d'injection (60).

2. Procédé selon la revendication 1, **caractérisé en ce que** le premier agent de diffusion (36) inséré dans le moule (18) s'étend au moins sur la deuxième largeur (42).

3. Procédé selon une des revendications 1 à 2, **caractérisé en ce que** la résistance à l'écoulement que le premier matériau de fibres et le premier agent de diffusion (36) opposent à la matière plastique liquide est sélectionnée et adaptée à la résistance à l'écoulement du matériau en fibres de carbone (46) de telle sorte que, à l'intérieur du matériau en fibres de carbone (46), il se forme un front d'écoulement essentiellement plan, s'étendant horizontalement sur la deuxième largeur (42).

4. Procédé selon une des revendications 1 à 3, **caractérisé en ce que** la résistance à l'écoulement que le premier matériau de fibres et le premier agent de diffusion (36) opposent à la matière plastique liquide, ainsi que la viscosité de la matière plastique liquide sont adaptées l'une à l'autre de telle sorte que la couche (24) au moins au nombre de un du premier matériau de fibres et le premier agent de diffusion (36) sont entièrement imprégnés avec la matière plastique liquide dans un délai de 60 s ou moins après la première sortie de la matière plastique liquide hors des canaux d'injection (60).

5. Procédé selon une des revendications 1 à 4, **caractérisé en ce que** le matériau en fibres de carbone (46) ne dépasse pas latéralement au-dessus du premier agent de diffusion (36).

6. Procédé selon une des revendications 1 à 5, **caractérisé en ce que**, lors de la disposition des canaux d'injection (60) dans la zone des tronçons de raccordement (56), des ouvertures de sortie (62) des canaux d'injection (60) sont disposées au-dessus ou sur le côté des tronçons de raccordement (56).

7. Procédé selon une des revendications 1 à 6, **caractérisé en ce que**, au-dessus des tronçons de raccordement (56), il est disposé un troisième agent de diffusion (58) qui va jusqu'au premier agent de diffusion (36) et, lors de la disposition des canaux d'injection (60) dans la zone des tronçons de raccordement (56), des ouvertures de sortie (62) des canaux d'injection (60) sont disposées de façon directement adjacente au troisième agent de diffusion (58).

8. Procédé selon une des revendications 1 à 7, **caractérisé en ce que** la multiplicité de couches du matériau en fibres de carbone (46) présente une épaisseur de 20 mm ou plus.

9. Procédé selon une des revendications 1 à 8, **caractérisé en ce que**, au-dessus du deuxième agent de diffusion (54), une plaque de pression (50) est insérée dans le moule (18).

10. Procédé selon une des revendications 1 à 9, **caractérisé en ce que**, lors de l'insertion de la couche (24) au moins au nombre de un du premier matériau de fibres, plusieurs couches (24, 28, 30, 32) du premier matériau de fibres sont insérées, au moins une des couches présentant la première largeur (26), et au moins une autre couche (30, 32) disposée au-dessus de cette couche présentant une troisième largeur (34) qui est plus faible que la première largeur (26) et plus grande que la deuxième largeur (42), de telle sorte qu'au moins un des tronçons de raccordement (56) présente un gradin.

11. Procédé selon une des revendications 1 à 10, **caractérisé en ce que** le premier agent de diffusion (36) présente un agent de diffusion (38) textile.

12. Procédé selon une des revendications 1 à 11, **caractérisé en ce que** le premier agent de diffusion (36) est un matériau conducteur de l'électricité.

13. Procédé selon la revendication 12, **caractérisé en ce que**, entre le matériau conducteur de l'électricité et le matériau en fibres de carbone (46), il est disposé au moins une couche (44) d'un matériau en fibres non conducteur de l'électricité.

14. Procédé de fabrication d'une demi-coque d'une âme de rotor d'éolienne (16), avec les étapes suivantes :
• fabrication d'un élément d'âme de rotor d'éolienne (16) avec une structure principale renforcée de fibres de carbone selon le procédé selon une des revendications 1 à 13,
• enlèvement de l'élément d'âme de rotor d'éolienne (16) hors du moule (18),
• insertion de l'élément d'âme de rotor d'éolienne (16) dans un moule de demi-coque (10),
• insertion d'une multiplicité de couches d'un matériau en fibres dans le moule de demi-coque (10) sur les deux côtés de l'élément d'âme de rotor d'éolienne (16) et au moins partiellement sur les tronçons de raccordement (56),
• fermeture du moule de demi-coque (10),
• infusion d'une matière plastique liquide durcissable dans un procédé d'infusion sous vide.
